# EUROPÄISCHE PATENTANMELDUNG

(11) **EP 0 883 081 A2**
(43) Veröffentlichungstag der Anmeldung: **09.12.1998**
(21) Anmeldenummer: 98110085.2
(22) Anmeldetag: 03.06.1998
(51) Int. Cl.: G06K 13/00

(54) **Telefonkartenaufnahme**

(30) Priorität: 05.06.1997 DE 19723658
(71) Anmelder: SIEMENS AKTIENGESELLSCHAFT, 80333 München (DE)
(72) Erfinder: Pfandler, Georg, 92421 Schwandorf (DE)

(57) **Zusammenfassung**

Eine Telefonkartenaufnahme für ein Mobiltelefon oder für ein Bedienteil in einem Kraftfahrzeug weist ein Gehäuseteil zur Unterbringung einer Telefonkarte auf. Mittels eines Ausgleichselements lassen sich unterschiedliche Dicken verschiedener Telefonkarten ausgleichen.

## Beschreibung

Die Erfindung betrifft eine Telefonkartenaufnahme wie sie insbesondere für Mobiltelefone oder für Bedienteile in Kraftfahrzeugen Verwendung finden.

Viele Kraftfahrzeuge werden mit einer Telefoneinheit ausgerüstet. Für den Betrieb einer solchen Telefoneinheit ist genauso wie bei einem Mobiltelefon eine Telefonkarte erforderlich. In Europa sind sogenannte GSM-Karten gebräuchlich. Die Dicke dieser Karten ist mit 0,84 mm normiert. Jedoch werden auch Karten anderer Dicken in den Verkehr gebracht. Insbesondere sind Adapterkarten, sogenannte Plug-in-Karten, mit einer Dicke bis zu 1,2 mm erhältlich.

Bekannte Telefonkartenaufnahmen für das Bedienteil eines Kraftfahrzeugs sind für eine bestimmte, normierte Dicke ausgelegt, in der Regel 0,84 mm. Werden dickere oder dünnere Karten in eine derartige Kartenaufnahme eingeführt, so ist eine zuverlässige Funktion der Kartenleseeinrichtung oder des Kartenausgabemechanismus nicht mehr gewährleistet. Insbesondere kann eine zu dicke Telefonkarte in der Telefonkartenaufnahme klemmen.

Aus der Offenlegungsschrift DE 36 10 202 A1 ist ein Hörer für ein Autotelefon bekannt, der an der Innenseite eines aufklappbaren Wandteils ein federbelastetes Andruckelement zum Andrücken einer Karte an eine Auflageplatte aufweist. Das Andruckelement dient zur Sicherung der Karte in der richtigen Leseposition.

Aus der Patentschrift DE 195 08 363 C1 ist ein Aufnahmegehäuse eines Mobiltelefons für eine Chipkarte bekannt. Durch einen Spannbügel wird eine zusätzliche Druckkraft auf einen Deckel ausgeübt, um eine zuverlässige Kontaktierung zwischen der Chipkarte und einem Kontaktträger des Aufnahmegehäuses zu gewährleisten.

Es ist ein Ziel der Erfindung, eine Telefonkartenaufnahme bereitzustellen, die für die Aufnahme von Telefonkarten unterschiedlicher Dicken geeignet ist.

Dieses Ziel wird mit einer Telefonkartenaufnahme nach Anspruch 1 erreicht. Vorteilhafte Ausgestaltungen der Erfindung sind in den Unteransprüchen angegeben.

Das Ausgleichselement, das die Dicken unterschiedlich starker Telefonkarten egalisiert, stellt eine raumsparende, fertigungstechnisch einfache und gleichzeitig höchst zuverlässige Lösung dar, wie sie für den Einsatz in einem Mobiltelefon oder einem Bedienteil eines Kraftfahrzeugs erforderlich ist.

Das Ausgleichselement besteht bevorzugt aus einem glasfaserverstärkten Kunststoff.

In einer vorteilhaften Ausführungsform ist das Ausgleichselement eine mit einem Gehäuseteil, das der Unterbringung der Telefonkarte dient, einstückig ausgebildete Federzunge, die eine Kuppe aufweist. Mit der Höhe der Kuppe läßt sich der Bereich einstellen, in dem ein Ausgleich unterschiedlicher Dicken von Telefonkarten erfolgt. Die Zunge hebt Karten, die dünner als die Karten der maximalen zulässigen Dicke sind, an, so daß sie gegenüber der Kartenleseeinrichtung dasselbe Niveau wie dicke Karten erreichen.

Weitere Merkmale, Vorteile und Anwendungsmöglichkeiten der Erfindung ergeben sich aus der nachfolgenden Beschreibung eines Ausführungsbeispiels in Verbindung mit den Zeichnungen.
Es zeigen:
- Figur 1: eine Draufsicht auf ein Gehäuseteil, das eine Telefonkarte aufnimmt, und
- Figur 2: einen Schnitt durch die Ebene II-II von Figur 1.

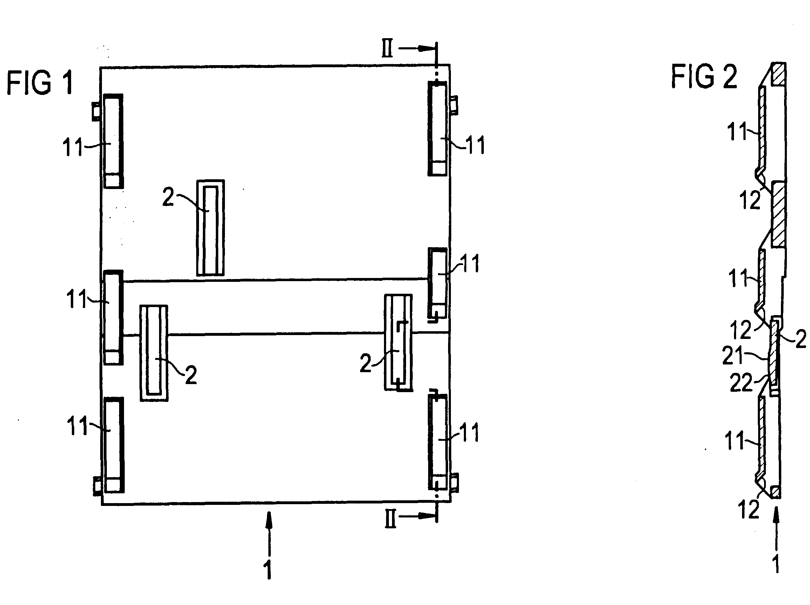

In Figur 1 ist ein plattenförmiges Gehäuseteil 1 oder Basisteil dargestellt. In dieses läßt sich eine Telefonkarte einführen. Das Gehäuseteil 1 besteht aus glasfaserverstärktem Kunststoff, beispielsweise aus Polyamid 6 mit 30% Glasfaseranteil. Das Gehäuseteil 1 weist zu beiden Seiten einer einzuführenden Karte eine Kartenführung 11 in Einführrichtung der Karte auf. Eine Kartenführung besteht jeweils aus drei voneinander beabstandeten Abschnitten.

Im Boden des Gehäuseteils 1 sind drei Federzungen 2 ausgebildet. Sowohl die Kartenführung 11 als auch die Federzunge sind einstückig mit dem Gehäuseteil 1 verbunden, sind also integraler Bestandteil des Gehäuseteils 1 und bestehen daher aus demselben Material.

Das Gehäuseteil 1 ist dazu bestimmt, in einen Gehäuseschacht eines Bedienteils als Schlitten eingesetzt zu werden.

Aus Figur 2 wird deutlich, daß eine Zunge 2, eine Kuppe 21 aufweist. Die Kuppe 2 hat eine Anlaufschräge 22 in Einführrichtung einer Telefonkarte. Daher steigt die Höhe der Kuppe 21 in Einführrichtung an. Die Kuppe ragt um 0,3 mm gegenüber den flachen Teil der Zunge 2 hervor. Zwischen dem Niveau des flachen Teils der Zunge 2 und dem Niveau der Kartenführung 11 besteht eine Differenz von 0,8 mm. Die dargestellte Kartenaufnahme ist daher geeignet für Karten einer Dicke zwischen 0,8 mm und 1,1 mm. Beim Einführen einer 1,1 mm dicken Karte wird die Kuppe um 0,3 mm nach unten weggedrückt. Dabei bildet die Kartenführung 11 ein Widerlager, das auf die Karte und somit die Federzunge 2 einwirkt, um die Kontaktoberflache der Federzunge in Richtung auf das Niveau des Bodens des Gehäuseteils 1 zu bringen.

Eine Karte mit einer Dicke von nur 0,8 mm würde dagegen die Federzunge 2, und genauer den Bereich der Kuppe 21 nicht nach unten wegdrücken und somit um 0,3 mm über dem Niveau des Bodens des Gehäuseteils 1 bleiben.

Entlang der Länge der Kuppen 21 ist die Kartenführung 11 in Einführrichtung der Karte jeweils unterbrochen. In Verbindung mit Einführschrägen 12 der Kartenführungen 11 wird ein Klemmen oder Verkanten einer einzuführenden Karte zuverlässig unterbunden. Die trichterartig ausgebildeten Einführschrägen 12 der Kartenführung 11 erleichtern das Einführen einer Karte deutlich. Zusätzlich helfen die Anlaufschrägen 22 der Federzungen 2, ein Haken einer einzuführenden Karte zu vermeiden.

## Patentansprüche

1. Telefonkartenaufnahme mit einem Gehäuseteil (1) zur Unterbringung einer Telefonkarte, **gekennzeichnet durch** ein einstückig mit dem Gehäuseteil (1) ausgebildetes Ausgleichselement (2), das unterschiedliche Dicken von Telefonkarten ausgleicht.

2. Telefonkartenaufnahme nach einem der vorhergehenden Ansprüche, dadurch gekennzeichnet, daß das Ausgleichselement (2) federnd gegenüber dem Gehäuseteil (1) gelagert ist.

3. Telefonkartenaufnahme nach einem der vorhergehenden Ansprüche, dadurch gekennzeichnet, daß das Ausgleichselement (2) als Federzunge ausgebildet ist.

4. Telefonkartenaufnahme nach dem vorhergehenden Anspruch, dadurch gekennzeichnet, daß die Federzunge eine Kuppe mit einer Schräge (22) aufweist, die in Einführrichtung einer Telefonkarte ansteigt.

5. Telefonkartenaufnahme nach einem der vorhergehenden Ansprüche, dadurch gekennzeichnet, daß das Ausgleichselement (2) ein Auflager für eine Telefonkarte bildet und eine einstückig mit dem Gehäuseteil (1) ausgebildete Kartenführung (11) ein Widerlager hierzu bildet.

6. Telefonkartenaufnahme nach einem der vorhergehenden Ansprüche, dadurch gekennzeichnet, daß das Gehäuseteil (1) ein in ein Gehäuse verschiebbarer Schlitten ist.
